# EUROPEAN PATENT SPECIFICATION

(11) **EP 3 253 499 B1**
(45) Date of publication and mention of the grant of the patent: **30.12.2020**
(21) Application number: 16717717.9
(22) Date of filing: 04.02.2016
(51) Int. Cl.: B05D 5/08, B05D 7/00

(54) **METHOD FOR MAKINGS POTS AND PANS, EQUIPPED WITH A MULTI-LAYER COATING OF NON-STICK MATERIAL**
VERFAHREN ZUR HERSTELLUNG VON TÖPFEN UND PFANNEN MIT EINER MEHRLAGIGEN BESCHICHTUNG AUS ANTIHAFTMATERIAL
PROCÉDÉ DE FABRICATION DE CASSEROLES ET DE POÊLES, ÉQUIPÉES D'UN REVÊTEMENT MULTICOUCHE DE MATÉRIAU ANTIADHÉSIF

(30) Priority: 06.02.2015 IT AN20150013
(43) Date of publication of application: 13.12.2017
(73) Proprietor: I.L.L.A. S.p.A., 43015 Noceto (PR) (IT)
(72) Inventor: ORLANDO, Vincenzo, 43123 Parma (PR) (IT); COSTI, Giuliano, 43013 Langhirano (PR) (IT)
(74) Representative: Montebelli, Marco
(86) International application number: PCT/IT2016/000028
(87) International publication number: WO 2016/125199

(56) References cited:
- WO-A2-2010/043826
- FR-A1- 2 904 206
- GB-A- 1 247 581

## Description

### Technical field

This invention relates to a method for making non-stick pots and pans.

### Background art

The prior art for making non-stick pots and pans involves coating the walls of the cooking cavity of the pots and pans by applying and baking in an oven several successive layers of a substance that has anti-friction properties, known as polytetrafluoroethylene (PTFE).

Before the first use of such pots and pans, some manufacturers recommend that users should grease the PTFE coating by wiping it with a wad of cotton soaked with edible oil.

The purpose of the edible oil is to fill the micro-pores of the layer of PTFE and to increase its non-stick capacity, as well as making it even more impermeable to the foods cooked.

Not all users always grease the pot before use. That may be because of a lack of attention or care, or because of a diet-related choice based on extreme attempts to minimise oil and grease consumption in the preparation of foods, which often is also consistent with the decision to purchase the type of pots and pans which are the subject matter of this invention.

Such an omission is the reason for the disadvantage that may be encountered, consisting of the fact that with repeated use, in the pot which has not been initially prepared as indicated above, the layer of non-stick material tends to see its pores gradually saturated with the absorption and infiltration of cooking fluids that in the medium-/long-term may make cleansing of the pot less and less effective, being able to affect its sanitisation, influence the flavour of the foods, and even the outer quality of the appearance of the non-stick layer.

Prior art, already knows document FR2904206. Such document discloses to make hydrophobic a lining pot or pan in production by using waterproofing of porosity of the coating material with a synthetic oil compatible with food.

Document GB 1247581 discloses, instead, to make hydrophobic such cooking articles by using a vegetable linseed oil.

### Disclosure of the invention

The technical purpose of this invention is to overcome such disadvantages.

As part of that purpose, the primary aim of the invention is to devise a solution that can be implemented in the pot from the time of its production.

### Brief description of the drawings

In accordance with that aim, the solution proposed consists of a production method whose technical features are clearly indicated in the claims herein, and whose advantages are more apparent in the detailed description which follows, with reference to the accompanying drawings, which illustrate a preferred embodiment by way of example only and without limiting the scope of the invention, in which:
- Figure 1 is a schematic partial cross-section elevation view of a pot;
- Figure 2 is an enlarged detail of the pot of Figure 1;
- Figure 3 is a schematic block diagram of several essential steps of a method for making a pot of the type illustrated in Figure 1.

### Preferred embodiments of the invention

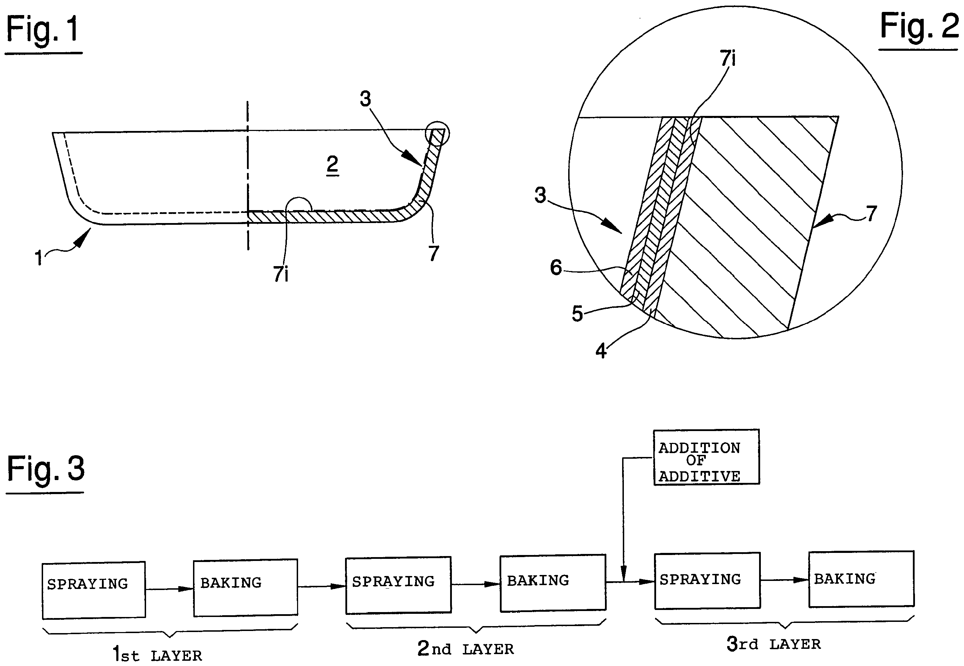

With reference to the accompanying drawings, in Figure 1, the numeral 1 denotes a pot of the known type comprising a cooking cavity 2 provided with a thin coating 3 made of non-stick material having its own multi-layer structure.

For the production of such a type of pot or pan equipped with a coating made of non-stick material for the cooking cavity 2, the Applicant applied a production method that comprises forming said coating 3 in multiple layers 4, 5 and 6, which are superposed and applied to the pot 1 one after another [Figure 2].

In practice, the inner surface 7i of the wall 7 of the cooking cavity 2 of the pot 1 is subjected to forming of the coating 3 which comprises [as schematically illustrated in Figure 3] the cyclical repetition of a step of application of suitable covering substances, and a subsequent drying and baking in an oven of the substance applied, steps that in sequence are repeated several times, each time using the most suitable materials, depending on the number of layers desired for construction of the coating of the inner cavity 2 of the pot 1.

Application of the covering layers may be performed with various methods, which in themselves are known, including, for example but without limiting, spraying or rolling of suitable liquid substances; or even methods for depositing covering powders.

The invention described above is susceptible of evident industrial application. It may also be modified and adapted in several ways without thereby departing from the scope of the appended claims.

In accordance with what is indicated above, it may be highlighted, more particularly - and still being explanatory and non-limiting - that the non-stick material used may be of various types, for example it may be plastic as happens when the non-stick material is in the families of polytetrafluoroethylenes (PTFE), or mineral if for example ceramic materials are used.

## Claims

1. A method for making pots and pans (1), equipped with a multi-layer coating (3) of non-stick material, comprising:
- the forming of multiple layers (4, 5, 6) of coating on an inner surface (7i) of a wall (7) delimiting a cooking cavity (2) by cyclical repetition of a step of applying suitable covering substances and subsequent drying and baking in an oven of said layers (4, 5, 6), at least the final layer (6) of said covering substances being obtained by using a non-stick substance; said method comprising, before the step of applying the substance for forming at least the final layer (6) coating the cooking cavity (2) of the pot (1), a step of adding as an additive edible oil or grease to the substance to be applied for forming said final layer (6) said method being **characterised in that** said step of adding the additive is carried out by mixing in the liquid state, and **in that** said edible oil or grease is of the vegetable type, and **in that** said edible oil is olive oil.

2. The method according to claim 1, **characterised in that** said step of adding olive oil as an additive is carried out by adding oil in a percentage of between 3% and 8%.

3. The method according to claim 2, **characterised in that** said percentage addition of olive oil is equal to 5%.

4. The method according to claim 1, **characterised in that** said layer (6) of non-stick material is made of a plastic material.

## Patentansprüche

1. Ein Verfahren zur Herstellung von Töpfen und Pfannen (1), ausgestattet mit einer mehrlagigen Beschichtung (3) aus Antihaftmaterial, Folgendes umfassend:
- Die Bildung mehrerer Beschichtungslagen (4, 5, 6) an einer Innenfläche (7i) einer Wand (7), die einen Kochraum (2) eingrenzt, durch die zyklische Wiederholung eines Schritts der Aufbringung von geeigneten Deckstoffen und darauf folgend der Trocknung und des Brennens der besagten Lagen (4, 5, 6) in einem Ofen, wobei mindestens die letzte Lage (6) besagter Deckstoffe durch Verwendung eines Antihaftstoffes erreicht wird; besagtes Verfahren umfasst, vor dem Schritt des Aufbringens des Stoffes zur Bildung mindestens der letzten Lage (6) die Beschichtung des Kochraums (2) des Topfs (1), einen Schritt des Hinzufügens von genießbarem Öl oder Fett als Zusatzstoff zu dem Stoff, der aufgebracht wird, um besagte letzte Lage (6) zu bilden, besagtes Verfahren ist dabei **dadurch gekennzeichnet, dass** der besagte Schritt des Hinzufügens des Zusatzstoffes durch Vermischung im flüssigen Zustand ausgeführt wird, und dadurch, dass besagtes genießbares Öl oder Fett pflanzlicher Art ist, und dadurch, dass es sich bei besagtem genießbaren Öl um Olivenöl handelt.

2. Das Verfahren nach dem Patentanspruch 1, **gekennzeichnet dadurch, dass** besagter Schritt des Hinzufügens von Olivenöl als Zusatzstoff ausgeführt wird, indem Öl in einem Prozentsatz zwischen 3 % und 8 % hinzugefügt wird.

3. Das Verfahren nach dem Patentanspruch 2, **gekennzeichnet dadurch, dass** besagter Prozentsatz des hinzugefügten Olivenöls gleich 5 % ist.

4. Das Verfahren nach dem Patentanspruch 1, **gekennzeichnet dadurch, dass** besagte Lage (6) des Antihaftmaterials aus einem Kunststoff besteht.

## Revendications

1. Un procédé de fabrication de casseroles et de poêles (1), dotées d'un revêtement multicouche (3) de matériau antiadhésif, comprenant:
- la formation de couches multiples (4, 5, 6) de revêtement sur une surface intérieure (7i) d'une paroi (7) délimitant une cavité de cuisson (2) par répétition cyclique d'une étape consistant à appliquer des substances de revêtement appropriées et par séchage successif et cuisson dans un four desdites couches (4, 5, 6), au moins la couche finale (6) desdites substances de revêtement étant obtenue en utilisant une substance antiadhésive ; ledit procédé comprenant, avant l'étape d'application de la substance pour former au moins la couche finale (6) de revêtement de la cavité de cuisson (2) de la casserole (1), une étape consistant à ajouter en tant qu'additif une huile ou graisse alimentaire à la substance à appliquer pour former ladite couche finale (6), ledit procédé étant **caractérisé en ce que** ladite étape d'ajout de l'additif est effectuée par mélange à l'état liquide, et **en ce que** ladite huile ou graisse alimentaire est de type végétal, et **en ce que** ladite huile alimentaire est de l'huile d'olive.

2. Le procédé selon la revendication 1, **caractérisé en ce que** ladite étape d'ajout d'huile d'olive en tant qu'additif est effectuée en ajoutant de l'huile dans un pourcentage compris entre 3 % et 8 %.

3. Le procédé selon la revendication 2, **caractérisé en ce que** ledit ajout en pourcentage d'huile d'olive est égal à 5 %.

4. Le procédé selon la revendication 1, **caractérisé en ce que** ladite couche (6) de matériau antiadhésif est réalisée dans une matière plastique.
